# EUROPÄISCHE PATENTANMELDUNG

(11) **EP 2 860 080 A2**
(43) Veröffentlichungstag der Anmeldung: **15.04.2015**
(21) Anmeldenummer: 14185611.2
(22) Anmeldetag: 19.09.2014
(51) Int. Cl.: B61D 19/00, F16H 19/04

(54) **Materialpaarung für einen Zahnstangenantrieb eines Schiebetürmoduls/Schwenkschiebetürmoduls**

(30) Priorität: 23.09.2013 AT 506072013
(71) Anmelder: Knorr-Bremse Gesellschaft mit beschränkter Haftung, 2340 Mödling (AT)
(72) Erfinder: Mair, Andreas, 4554 Oberschlierbach (AT); Ernst, Michael, 3340 Waidhofen an der Ybbs (AT)
(74) Vertreter: Burger, Hannes

(57) **Zusammenfassung**

Es wird ein Schiebetürmodul/Schwenkschiebetürmodul (1) für ein Schienenfahrzeug angegeben, das einen Türflügel (21, 22) und einen in Schieberichtung des Türflügels (21, 22) längs ausgerichteten Träger (3) umfasst, welcher insbesondere quer zu seiner Längserstreckung in horizontaler Richtung verschiebbar gelagert ist. Weiterhin weist das Schiebetürmodul/Schwenkschiebetürmodul (1) eine Linearführung zur Lagerung der der Türflügel (21, 22) auf, welche auf dem Träger (3) befestigt oder in diesem integriert ist. Die Türflügel (21, 22) werden mit Hilfe eines Zahnstangenantriebs bewegt, dessen Zahnrad (9) eine härtere Oberfläche beziehungsweise ein härteres Material aufweist als dessen Zahnstange (71, 72).

## Beschreibung

Die Erfindung betrifft ein Schiebetürmodul/Schwenkschiebetürmodul für ein Schienenfahrzeug, umfassend einen Türflügel, einen in Schieberichtung des Türflügels längs ausgerichteten Träger, welcher insbesondere quer zu seiner Längserstreckung in horizontaler Richtung verschiebbar gelagert ist, und eine Linearführung mit einer Profilschiene und wenigstens einem darauf verschiebbar gelagerten Führungswagen oder Führungsschlitten. Die Profilschiene ist auf dem Träger befestigt oder von diesem in Form eines Profilbereichs umfasst. Der Türflügel ist mit Hilfe des zumindest einen Führungswagens/Führungsschlittens verschiebbar gelagert.

Schiebetürmodule/Schwenkschiebetürmodule der genannten Art sind grundsätzlich bekannt. Dabei ist zumeist ein Türflügel oder es sind zwei Türflügel verschiebbar gelagert, welche zum Öffnen im Falle eines Schwenkschiebetürmoduls mit Hilfe einer Ausstellmechanik zuerst ausgestellt und dann verschoben werden oder im Falle eines Schiebetürmoduls nur verschoben werden. Für die Schiebebewegung werden nach dem Stand der Technik zum Beispiel Spindelantriebe, Seilzüge sowie Zahnstangenantriebe eingesetzt.

Aus der EP 2 287 428 A2 ist beispielsweise ein Schwenkschiebetürmodul mit einem Zahnstangenantrieb bekannt, dessen Komponenten vorzugsweise aus Kunststoff bestehen. Nachteilig ist daran, dass sich ein solcher Zahnstangenantrieb aufgrund des doch leicht verschleißenden Kunststoffs rasch abnutzt und dann gewartet oder getauscht werden muss. Dies betrifft insbesondere Schienenfahrzeuge im urbanen Nahverkehr, bei denen die Türen praktisch im Minutentakt geöffnet und wieder geschlossen werden.

Eine Aufgabe der Erfindung ist es daher, ein verbessertes Schiebetürmodul/Schwenkschiebetürmodul anzugeben. Insbesondere soll die Zuverlässigkeit des Zahnstangenantriebs gesteigert werden.

Die Aufgabe der Erfindung wird mit einem Schiebetürmodul/Schwenkschiebetürmodul der eingangs genannten Art gelöst, das einen Zahnstangenantrieb für den Türflügel umfasst, dessen Zahnrad eine härtere Oberfläche beziehungsweise ein härteres Material aufweist als dessen Zahnstange.

Dadurch ist der Zahnstangenantrieb besonders leise. Weiterhin nutzen sich Zahnstange und Zahnrad in etwa gleich ab, da eine einzelne Zahnflanke der Zahnstange aufgrund der Größenverhältnisse deutlich seltener mit dem Zahnrad in Eingriff steht als umgekehrt. Das heißt eine Zahnflanke des Zahnrads wird stärker beansprucht als eine Zahnflanke der Zahnstange. Im Endergebnis muss der vorgestellte Zahnstangenantrieb nicht oder nur selten gewartet beziehungsweise getauscht werden, da das stärker beanspruchte Zahnrad auch widerstandsfähiger ist als die weniger beanspruchte Zahnstange.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn das Zahnrad aus Metall und die Zahnstange aus Kunststoff, insbesondere aus Polyamid PA12G, bestehen. Beispielsweise kann die Zahnstange durch ein Spritzgussteil gebildet sein. Durch die Verwendung von Polyamid PA12G resultiert insbesondere eine hohe Lebensdauer des Zahnstangenantriebs bei nur geringem Betriebsgeräusch.

Besonders vorteilhaft ist es auch, wenn das Zahnrad aus Metall besteht und die Zahnstange einen metallischen Träger, insbesondere aus Stahl oder Aluminium, mit einer darauf montierten Kunststoffverzahnung, insbesondere aus Polyamid PA12G, aufweist. Dadurch wird gleichzeitig mit den oben genannten Vorteilen eine hohe Stabilität der Zahnstange erreicht. Zudem wird auch ein Verzug der Zahnstange vermieden, so wie er beim Härtevorgang von Zahnstangen aus Stahl auftritt. Durch die Verwendung von Polyamid PA12G und/oder Aluminium kann auch das Schwingungsverhalten der Zahnstangen verbessert werden, da beide Materialien leicht sind und ein gutes Dämpfungsverhalten aufweisen, sodass Schwingungen in nur geringen Maße angeregt werden, beziehungsweise rasch wieder abklingen. Beide Materialien sind zudem sehr biegsam, sodass sie bei einer Verformung nur geringe Lagerkräfte beim Zahnrad verursachen.

Vorteilhaft ist es, wenn die Kunststoffverzahnung mit Hilfe einer Rastverbindung auf den metallischen Träger befestigt ist. Dadurch kann die Zahnstange besonders rasch hergestellt werden, da die Verzahnung lediglich auf den Träger aufgeclipst werden muss. Beispielsweise werden dazu Rastnasen an der Kunststoffverzahnung in Bohrungen im metallischen Träger eingesteckt. Denkbar sind natürlich auch andere Befestigungstechniken wie zum Beispiel ein Aufkleben der Kunststoffverzahnung auf den metallischen Träger. Möglich ist auch, dass die Kunststoffverzahnung direkt bei deren Herstellung mit dem metallischen Träger verbunden wird, beispielsweise in dem diese auf den Träger aufgespritzt oder aufgegossen wird.

Günstig ist es, wenn die Kunststoffverzahnung aus mehreren Segmenten besteht. Dadurch wird die Herstellung einer Zahnstange beliebiger Länge vereinfacht, da dazu lediglich beliebig viele relativ kurze Zahnsegmente aneinander gereiht werden. Eine Spritzgussform für ein solches Zahnsegment kann ebenfalls vergleichsweise einfach hergestellt werden.

Vorteilhaft ist es weiterhin, wenn die Segmente untereinander durch eine Nut-Feder-Verbindung oder eine Schwalbenschwanzverbindung verbunden sind. Dadurch wird eine unerwünschte Verschiebung der Segmente zueinander vermieden.

Vorteilhaft ist es, wenn der Zahnstangenantrieb für den Türflügel eine lediglich in ihrem ersten Endbereich mit dem zumindest einen Führungswagen/Führungsschlitten beziehungsweise dem Türflügel direkt oder indirekt verbundene Zahnstange umfasst, dessen fliegendes Ende mit einem drehbar im Träger gelagerten Zahnrad in Eingriff steht. Durch die vorgeschlagenen Maßnahmen wird einem Verspannen des Zahnstangenantriebs vorgebeugt, selbst wenn sich der Träger, entlang dessen sich die Führungswägen/Führungsschlitten bewegen, aufgrund des Gewichts des Schiebetürmoduls/Schwenkschiebetürmoduls oder anderer Belastungen verformt. Die Zahnstange ist durch die einseitige Montage nämlich vom Träger entkoppelt und muss einer Verformung desselben nicht folgen. Der Zahnstangenantrieb bleibt somit auch dann leichtgängig und ist zuverlässig, wenn eine vergleichsweise große Verformung des Trägers zugunsten eines reduzierten Gewichts des Schiebetürmoduls/Schwenkschiebetürmoduls konstruktiv zugelassen wird.

Günstig ist es, wenn der erste Endbereich der Zahnstange gegenüber dem zumindest einen Führungswagen/Führungsschlitten lagefixiert ist. Dadurch kann die Zahnstange mit einfachen Mitteln befestigt, beispielsweise angeschraubt, werden.

Vorteilhaft ist es aber auch, wenn der erste Endbereich der Zahnstange gegenüber dem zumindest einen Führungswagen/Führungsschlitten drehbar und/oder verschiebbar gelagert ist. Auf diese Weise wird die Zahnstange vom Träger noch besser entkoppelt, sodass sich dieser noch stärker verformen kann, ohne dass der Zahnstangenantrieb beeinträchtigt wird. Beispielsweise kann der erste Endbereich mit Hilfe eines drehbaren Zapfens gelagert sein. Denkbar ist auch, dass ein (zylindrischer) Zapfen in einem Langloch gelagert ist und so eine dreh- und verschiebbare Lagerung verwirklicht wird. Ist nur eine verschiebbare Lagerung gewünscht, so kann dies beispielsweise mit Hilfe eines in einer Nut geführten Nutsteins oder zum Beispiel auch mit einer Schwalbenschwanzverbindung realisiert werden.

Besonders vorteilhaft ist es, wenn gegenüber dem Zahnrad eine erste Gleitführung oder ein Wälzkörper für die Führung der Zahnstange angeordnet ist. Dadurch wird verhindert, dass die Zahnstange vom Zahnrad abhebt. Beispielsweise kann die erste Gleitführung durch ein gegenüber dem Zahnrad angeordnetes Kunststoffklötzchen (z.B. aus Teflon) gebildet sein. Zwischen dem Klötzchen und dem Zahnrad wird dann die Zahnstange verschiebbar hindurchgeführt. Der Wälzkörper kann insbesondere als (kugelgelagerte) Rolle ausgebildet sein.

Besonders vorteilhaft ist es auch, wenn das fliegende Ende der Zahnstange in einer zweiten Gleitführung gelagert ist. Auf diese Weise wird verhindert, dass das fliegende Ende im Betrieb des Schienenfahrzeugs zu starken Schwingungen angeregt wird und Lärm oder sogar Beschädigungen verursacht. Beispielsweise kann die zweite Gleitführung durch ein Element an der Zahnstange (z.B. Gleitbolzen, Nutstein, etc.) gebildet sein, das verschiebbar in einer Nut geführt ist.

Besonders vorteilhaft ist es auch, wenn die Zahnstange an mehreren voneinander beabstandeten Punkten in einer zweiten Gleitführung gelagert ist. Beispielsweise können diese Lagerpunkte an Stellen angeordnet sein, an denen sich ansonsten starke Schwingungen ausbilden würden (Schwingungsbäuche). Da sich das Schwingungsverhalten der Zahnstange ja mit der Stellung relativ zum Zahnrad ändert, kann das Schwingungsverhalten der Zahnstange auch im Rahmen einer Computersimulation analysiert werden, wodurch die Lagerpunkte an geeigneter Stelle positioniert werden können. Insbesondere kann für Positionierung der Lagerpunkte das Schwingungsverhalten der Zahnstange in der Offenstellung und der Schließstellung der Schiebetür herangezogen werden. Als besonders vorteilhaft hat es sich herausgestellt, wenn die Zahnstange an drei Lagerpunkten verschiebbar gelagert ist, insbesondere wenn diese Lagerpunkte und der Befestigungspunkt im ersten Endbereich voneinander gleich weit beabstandet sind.

Besonders vorteilhaft ist es, wenn das Schiebetürmodul/Schwenkschiebetürmodul doppelflügelig ausgeführt ist und das Zahnrad mit zwei Zahnstangen in Eingriff steht, von denen je eine für die Bewegung je eines Türflügels vorgesehen ist, wobei die Zahnstangen mit einander zuweisender Zahnung gegenüberliegend angeordnet sind. Dadurch können beide Türflügel mit nur einem Zahnrad angetrieben werden. Von Vorteil an dieser Anordnung ist auch, dass sie mit nur geringen Adaptionen (d.h. durch Weglassen einer der Zahnstangen) für ein einflügeliges Schiebetürmodul/Schwenkschiebetürmodul eingesetzt werden kann.

Günstig ist es in obigem Zusammenhang, wenn eine Zahnstange mit nach unten weisender Zahnung oberhalb des Zahnrads und die andere Zahnstange mit nach oben weisender Zahnung unterhalb des Zahnrads angeordnet sind. Auf diese Weise kann ein Schiebetürmodul/Schwenkschiebetürmodul mit vergleichsweise geringer Einbautiefe realisiert werden. Denkbar ist aber natürlich auch, dass die Achse des Zahnrads vertikal ausgerichtet ist und dementsprechend eine Zahnstange vor dem Zahnrad und eine dahinter angeordnet ist. Generell ist auch der Einsatz eines Kronenrads oder Kegelrads anstelle eines Stirnrads vorstellbar. Dabei können die Zahnstangen bei vertikaler Ausrichtung der Radachse oberhalb und unterhalb, bei horizontaler Ausrichtung der Radachse vor und hinter dem Rad angeordnet sein.

Günstig ist es schließlich auch, wenn das Schiebetürmodul/Schwenkschiebetürmodul einen auf dem zumindest einen Führungswagen/Führungsschlitten befestigten Querträger umfasst, in welchem der Türflügel drehbar gelagert ist und auf welcher die Zahnstange befestigt ist. Dadurch kann der Türflügel in seiner Neigung eingestellt werden und auch für Schienenfahrzeuge mit geneigten Seitenwänden eingesetzt werden. Darüber hinaus bleibt der Türflügel selbst dann in seiner vorbestimmten Lagen, wenn sich der Träger, auf dem die Türflügel gelagert sind, verwindet.

Zum besseren Verständnis der Erfindung wird diese anhand der nachfolgenden Figuren näher erläutert. Es zeigen
- Fig. 1: ein schematisch dargestelltes und beispielhaftes Schiebetürmodul/Schwenkschiebetürmodul für ein Schienenfahrzeug im Längsschnitt;
- Fig. 2: das Schiebetürmodul/Schwenkschiebetürmodul aus Fig. 1 im Querschnitt;
- Fig. 3: ein Beispiel für eine Zahnstange mit einem metallischen Träger und einer darauf montierten Kunststoffverzahnung;
- Fig. 4: ein Beispiel für einen Zahnstangenantrieb mit einer ersten Gleitführung gegenüber dem Antriebsrad;
- Fig. 5: ein Beispiel für einen Zahnstangenantrieb mit einer gelenkigen Aufhängung der Zahnstange, die an ihrem fliegenden Ende zusätzlich verschiebbar geführt ist;
- Fig. 6: ein Beispiel für einen Zahnstangenantrieb mit einer gelenkigen Aufhängung der Zahnstange, die an mehreren Punkten zusätzlich verschiebbar geführt ist und
- Fig. 7: wie Fig. 5, nur mit einer verschiebbaren Aufhängung der Zahnstange.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

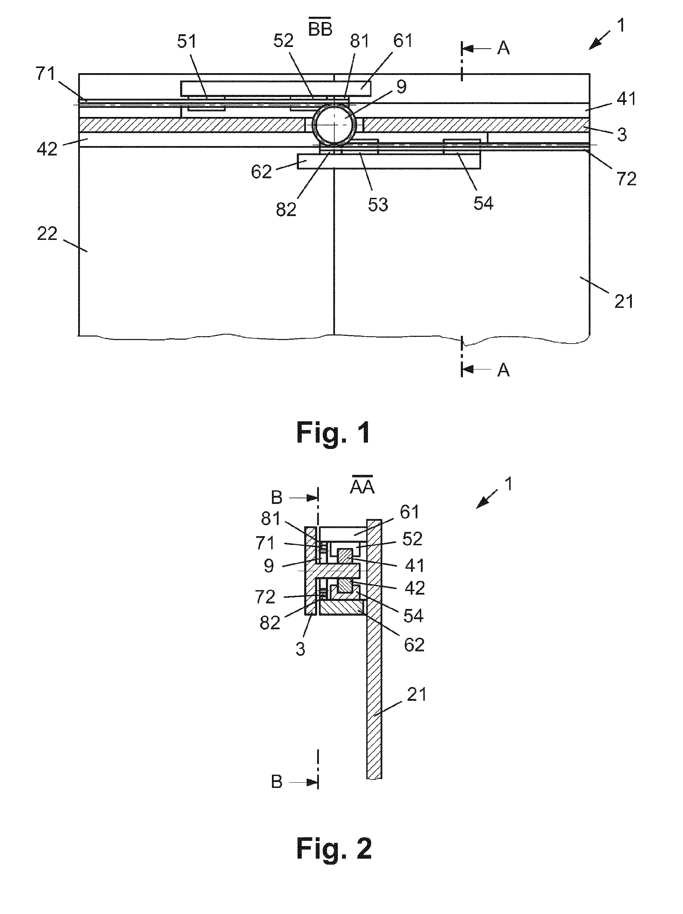

Die Figuren 1 und 2 zeigen ein schematisch dargestelltes und beispielhaftes Schiebetürmodul/Schwenkschiebetürmodul 1 für ein Schienenfahrzeug, welches zwei Türflügel 21, 22 und einen in Schieberichtung des Türflügels 21, 22 längs ausgerichteten Träger 3 umfasst, welcher im Falle eines Schwenkschiebetürmoduls quer zu seiner Längserstreckung in horizontaler Richtung verschiebbar oder im Falle eines Schiebetürmoduls fix gelagert ist. Weiterhin umfasst das Schiebetürmodul/Schwenkschiebetürmodul 1 zwei Linearführungen mit je einer Profilschiene 41, 42 und je zwei darauf verschiebbar gelagerten Führungswägen oder Führungsschlitten 51..54. Die Führungswägen/Führungsschlitten 51 und 52 sind dabei mit einem ersten Querträger 61 verbunden, an dem der erste Türflügel 21 - beispielsweise über eine Konsole - befestigt ist. Die Führungswägen/Führungsschlitten 53 und 54 sind mit einem zweiten Querträger 62 verbunden, an dem der zweite Türflügel 22 - beispielsweise ebenfalls über eine Konsole - befestigt ist. Die Türflügel 21, 22 sind somit mit Hilfe der Führungswägen/Führungsschlitten 51..54 verschiebbar gelagert. Die Türflügel 21, 22 könnten zudem in den Querträgern 61, 62 beziehungsweise daran befestigten Konsolen drehbar (um eine in Schieberichtung der Türflügel 21, 22 ausgerichtete Drehachse) gelagert sein.

Die Profilschienen 41, 42 sind in diesem Beispiel auf dem Träger 3 befestigt. Alternativ zu einer gesonderten Profilschiene 41, 42 könnte der Träger 3 auch einen Profilbereich aufweisen, auf dem der Führungswagen oder Führungsschlitten 51..54 gelagert ist.

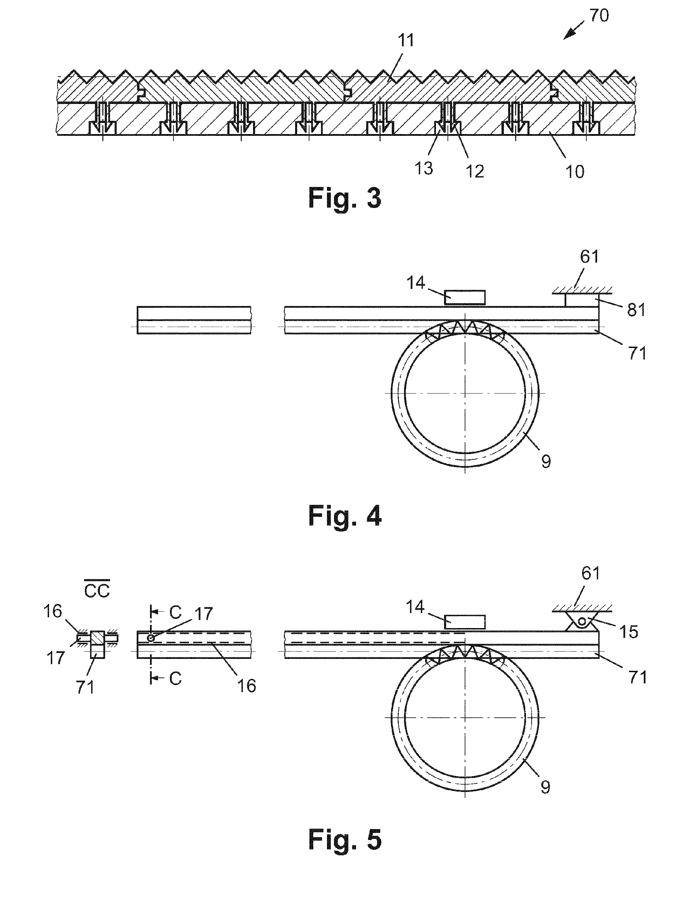

Weiterhin weist das Schiebetürmodul/Schwenkschiebetürmodul 1 zwei Zahnstangenantriebe für die Türflügel 21, 22 auf. Die Zahnstangenantriebe weisen in diesem Beispiel je eine lediglich in ihrem ersten Endbereich mit je einem Führungswagen/Führungsschlitten 51..54 beziehungsweise je einem Türflügel 21, 22 direkt oder indirekt verbundene Zahnstange 71, 72 auf. Konkret ist in dem gezeigten Beispiel je eine Zahnstange 71 und 72 über je eine Verbindungsplatte 81, 82 an je einem Querträger 61, 62 befestigt. Im Speziellen ist der erste Endbereich einer jeden Zahnstange 71, 72 in diesem Beispiel somit gegenüber je einem Führungswagen/Führungsschlitten 51..54 lagefixiert. Es könnte aber auch vorgesehen sein, dass der erste Endbereich einer jeden Zahnstange 71, 72 gegenüber je einem Führungswagen/Führungsschlitten 51..54 drehbar gelagert ist (siehe hierzu auch Fig. 5). Die fliegenden Ende der Zahnstangen 71, 72 stehen mit einem drehbar im Träger 3 gelagerten Zahnrad 9 in Eingriff.

Konkret ist das dargestellte Schiebetürmodul/Schwenkschiebetürmodul 1 in diesem Beispiel somit doppelflügelig ausgeführt, und das Zahnrad 9 steht mit zwei Zahnstangen 71, 72 in Eingriff, von denen je eine für die Bewegung je eines Türflügels 21, 22 vorgesehen ist, und wobei die Zahnstangen 71, 72 mit einander zuweisender Zahnung gegenüberliegend angeordnet sind. Die Zahnstange 71 ist dabei mit nach unten weisender Zahnung oberhalb des Zahnrads 9 und die Zahnstange 72 mit nach oben weisender Zahnung unterhalb des Zahnrads 9 angeordnet. Auf diese Weise gelingt es, beide Türflügel 21, 22 mit nur einem Zahnrad 9 anzutreiben. Dreht sich dieses im Uhrzeigersinn wird die Schiebetür geöffnet, dreht es sich gegen den Uhrzeigersinn, wird die Schiebetür geschlossen. Von Vorteil an dieser Anordnung ist auch, dass sie mit nur geringen Adaptionen für ein einflügeliges Schiebetürmodul/Schwenkschiebetürmodul eingesetzt werden kann.

Generell ist auch der der Einsatz eines Kronenrads oder Kegelrads anstelle des in der Fig. 1 dargestellten Stirnrads 9 vorstellbar. Dadurch kann die Radachse bei der gezeigten Anordnung der Zahnstangen 71 und 72 vertikal ausgerichtet werden. Wird die Radachse eines Kronenrads oder Kegelrads dagegen horizontal ausgerichtet, so können die Zahnstangen 71 und 72 dementsprechend vor und hinter dem Rad angeordnet sein.

Generell weist das Zahnrad 9 eine härtere Oberfläche auf als die Zahnstangen 71, 72. Auf diese Weise kann die Lärmemission des Zahnstangenantriebs gering gehalten werden. Beispielsweise können das Zahnrad 9 aus Metall und die Zahnstangen 71, 72 aus Kunststoff bestehen. Von besonderem Vorteil ist es in diesem Zusammenhang, wenn die Zahnstange 70 wie in Fig. 3 dargestellt einen metallischen Träger 10, insbesondere aus Stahl oder Aluminium, mit einer darauf montierten Kunststoffverzahnung 11, insbesondere aus Polyamid PA12G, aufweist. Auf diese Weise kann ein Verzug der Zahnstangen 71, 72, so wie er in der Regel beim Härtevorgang von Zahnstangen aus Stahl auftritt, vermieden werden.

Konkret ist die Kunststoffverzahnung 11 mit Hilfe von Rastnasen 12, welche in Bohrungen 13 im Träger 10 eingesteckt werden, auf dem metallischen Träger 10 montiert. Selbstverständlich wäre es aber auch denkbar, die Kunststoffverzahnung 11 auf den Träger 10 aufzuschrauben oder aufzunieten. In letzterem Fall wäre es beispielsweise vorstellbar, anstelle der Rastnasen 12 zylindrische Stifte vorzusehen deren Enden beispielsweise durch Erwärmen und/oder Druck verformt werden.

Die Kunststoffverzahnung 11 besteht in diesem Beispiel aus mehreren Segmenten, was aber nicht zwingend der Fall sein muss. Des Weiteren sind die Segmente untereinander durch eine optionale Nut-Feder-Verbindung verbunden, um eine Verschiebung der Segmente untereinander zu vermeiden. Alternativ könnten die Segmente auch mit einer Schwalbenschwanzverbindung verbunden sein oder auch einfach stumpf aneinander stoßen.

In einer weiteren Ausführungsform ist die Kunststoffverzahnung 11 auf den Träger 10 (stumpf) aufgeklebt. Möglich ist auch, dass die Kunststoffverzahnung 11 auf den Träger 10 aufgespritzt oder aufgegossen wird.

Die Figur 4 zeigt ein Beispiel für einen Zahnstangenantrieb, bei dem gegenüber dem Zahnrad 9 eine erste Gleitführung 14 für die Zahnstange 71 angeordnet ist. Beispielsweise kann diese Gleitführung 14 durch einen Kunststoffteil gebildet sein, über das die Zahnstange 71 hinweg rutscht. Dadurch wird verhindert, dass die Zahnstange 71 vom Zahnrad 9 abhebt. Der Einfachheit halber ist in der Fig. 4 nur der Zahnstangenantrieb isoliert vom Rest eines Schiebetürmoduls/Schwenkschiebetürmoduls dargestellt. Anstelle der Gleitführung 14 kann in der Figur 4 auch ein Wälzkörper zur Führung der Zahnstange 71 vorgesehen sein. Beispielsweise kann dieser Wälzkörper durch eine (kugelgelagerte) Rolle ausgeführt sein.

Die Figur 5 zeigt ein weiteres Beispiel für einen Zahnstangenantrieb, der dem in Fig. 4 dargestellten Zahnstangenantrieb ähnlich ist. Im Unterschied dazu, ist die Zahnstange 71 aber nicht fix über eine Verbindungsplatte 81 mit dem Querträger verbunden, sondern mit einem Drehlager 15. Auf diese Weise kann eine Verformung des Trägers 3, welche insbesondere durch das Gewicht der Türflügel 21, 22 resultiert, ausgeglichen werden. In diesem Fall weist das Drehlager 15 einen Drehbolzen auf. Denkbar wäre aber auch, dass die Zahnstange 71 mit Hilfe eines Kugelkopfes im Querträger 61 gelagert ist.

Um die Führung der Zahnstange 71 weiter zu verbessern, kann das fliegende Ende derselben in einer zweiten Gleitführung gelagert sein, die in diesem Beispiel eine Nut 16 sowie einen darin verschiebbar gelagerten Bolzen 17 umfasst, der mit der Zahnstange 71 verbunden ist. Die Nut 16 ist beispielsweise im Träger 3 eingearbeitet, kann aber zum Beispiel auch durch eine auf dem Träger 3 montierte Schiene, insbesondere durch ein U-Profil, gebildet sein.

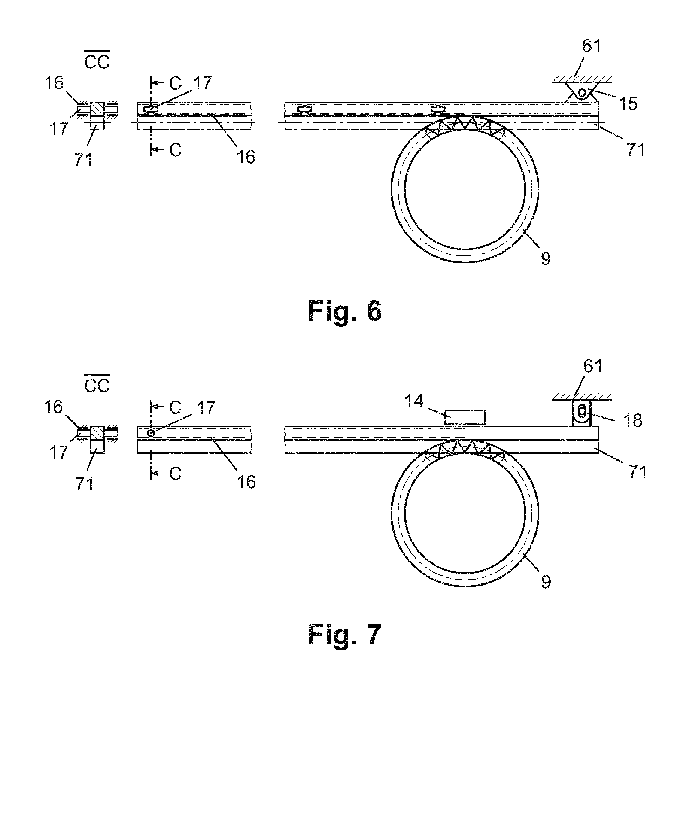

Figur 6 zeigt schließlich zeigt ein Beispiel für einen Zahnstangenantrieb, der dem in Fig. 5 dargestellten Zahnstangenantrieb ähnlich ist. Im Unterschied dazu, ist die Zahnstange 71 aber nicht nur an ihrem fliegenden Ende verschiebbar in einer Nut 16 gelagert, sondern an mehreren Punkten. Zudem sind die Gleitkörper keine Bolzen sondern Nutsteine 17 mit bombierten Gleitflächen.

Beispielsweise können diese Nutsteine 17 an Stellen angeordnet sein, an denen sich ansonsten starke Schwingungen ausbilden würden (Schwingungsbäuche). Da sich das Schwingungsverhalten der Zahnstange 71 mit der Stellung relativ zum Zahnrad 9 ändert, kann das Schwingungsverhalten der Zahnstange 71 im Rahmen einer Computersimulation analysiert werden, wodurch die Nutsteine 17 an geeigneter Stelle positioniert werden können. Vereinfacht kann auch lediglich das Schwingungsverhalten der Zahnstange 71 in der Offenstellung und der Schließstellung der Schiebetür für die Positionierung der Nutsteine 17 herangezogen werden. Vorteilhaft ist es insbesondere, wenn drei Nutsteine 17 (oder auch adere Führungen wie z.B. Gleitbolzen) jeweils im Abstand von etwa 1/3 vom fliegenden Ende aus beginnend auf der Zahnstange 71 verteilt werden, wobei 1 die Länge der Zahnstange 71 angibt. Bei geeigneter Positionierung der Nutsteine 17 kann wegen dem nur geringen Abheben der Zahnstange 71 vom Zahnrad 9 unter Umständen eine erste Gleitführung 14 entfallen, so wie dies in der Fig. 6 dargestellt ist.

Fig. 7 zeigt ein weiteres Beispiel für die Aufhängung einer Zahnstange 71, welche der in Fig. 5 gezeigten Aufhängung sehr ähnlich ist. Anstelle des Drehlagers 15 ist bei diesem Beispiel allerdings ein kombiniertes Dreh- und Schiebelager 18 vorgesehen. Konkret ist dieses dadurch verwirklicht, dass ein (zylindrischer) Bolzen in einem Langloch gelagert ist und so eine Schiebebewegung und eine Drehbewegung der Zahnstange 71 gegenüber dem, Querträger 61zulässt. Dadurch können zum Beispiel fertigungsbedingte und/oder temperaturbedingte Toleranzen noch besser ausgeglichen werden.

Denkbar wäre auch, das Lager 18 nur als Schiebelager auszuführen, das heißt nur eine Verschiebebewegung der Zahnstange 71 gegenüber dem Querträger 61 zuzulassen, jedoch keine Drehbewegung. Dies kann konstruktiv beispielsweise dadurch bewerkstelligt werden, dass anstelle eines Bolzens ein Zapfen mit rechteckigem Querschnitt im Langloch verschiebbar (jedoch unverdrehbar) gelagert ist. Gleichermaßen ist auch der Einsatz einer andere Linearführung, beispielsweise einer Schwalbenschwanzführung, vorstellbar.

In der Fig. 7 ist nur das erste (hier das rechte) Ende der Zahnstange 71 mit einem Dreh- und Schiebelager 18 ausgestattet. Denkbar ist aber auch, dass das fliegende Ende mit einem solchen Dreh- und Schiebelager 18 ausgestattet ist und so den Gleitbolzen/Nutstein 17 (siehe Fig. 5) ersetzt. Diese Ausführungsform ist nicht nur auf das fliegende Ende der Zahnstange 71 limitiert, sondern Dreh- und Schiebelager 18 können auch an mehreren Punkten (siehe auch Fig. 6) eingesetzt werden. Auch hier kann das Lager 18 nur als Schiebelager ausgeführt werden.

Beispielsweise kann bei den Ausführungsformen des letzten Absatzes am oberen Ende des Dreh- und/oder Schiebelagers 18 ein in einer Nut 16 geführter Gleitbolzen/Nutstein 17 vorgesehen sein. Der Gleitbolzen/Nutstein 17 erlaubt dann die Verschiebung der Zahnstange 71 in horizontaler Richtung, das Dreh- und/oder Schiebelager 18 eine Verschiebung derselben in vertikaler Richtung sowie gegebenenfalls auch deren Drehung. Denkbar wäre aber auch, die Nut 16 in den Fig. 5 und 6 einfach entsprechend breit auszuführen, sodass der Der Gleitbolzen/Nutstein 17 ein entsprechendes vertikales Spiel hat.

Um ein freies Herumschlagen der Zahnstange 71 zu vermeiden, können auch Dämpfungselemente (z.B. aus einem Elastomer) eingesetzt werden. Beispielsweise kann eine (an sich zu breite) Nut 17 mit einem Elastomer ausgekleidet sein, sodass eine vertikale Bewegung der Zahnstange 71 zwar ermöglicht wird, dem aber doch ein gewisser Widerstand entgegengesetzt wird. Zu demselben Zweck kann beispielsweise auch die Innenseite des Langlochs des Dreh- und Schiebelagers 18 mit einem dämpfenden Material ausgekleidet sein

Generell hat sich eine Zahnstange 71, 72 aus Polyamid PA12G, beziehungsweise eine Verbund-Zahnstange 71, 72 (siehe Fig. 3) mit einem Träger 10 aus Aluminium und einer Verzahnung 11 aus Polyamid PA12G im Hinblick auf das Schwingungsverhalten der Zahnstange 71, 72 als vorteilhaft herausgestellt. Sowohl Polyamid PA12G als auch Aluminium sind leicht und weisen ein gutes Dämpfungsverhalten auf, sodass Schwingungen in nur geringen Maße angeregt werden beziehungsweise rasch wieder abklingen. Beide Materialien sind zudem sehr biegsam, sodass sie einer Verformung des Trägers 3 leicht folgen können und dabei keine übermäßig großen Lagerkräfte beim Zahnrad 9 verursachen.

Weitere vorteilhafte Materialkombinationen können den untenstehenden Tabellen entnommen werden:

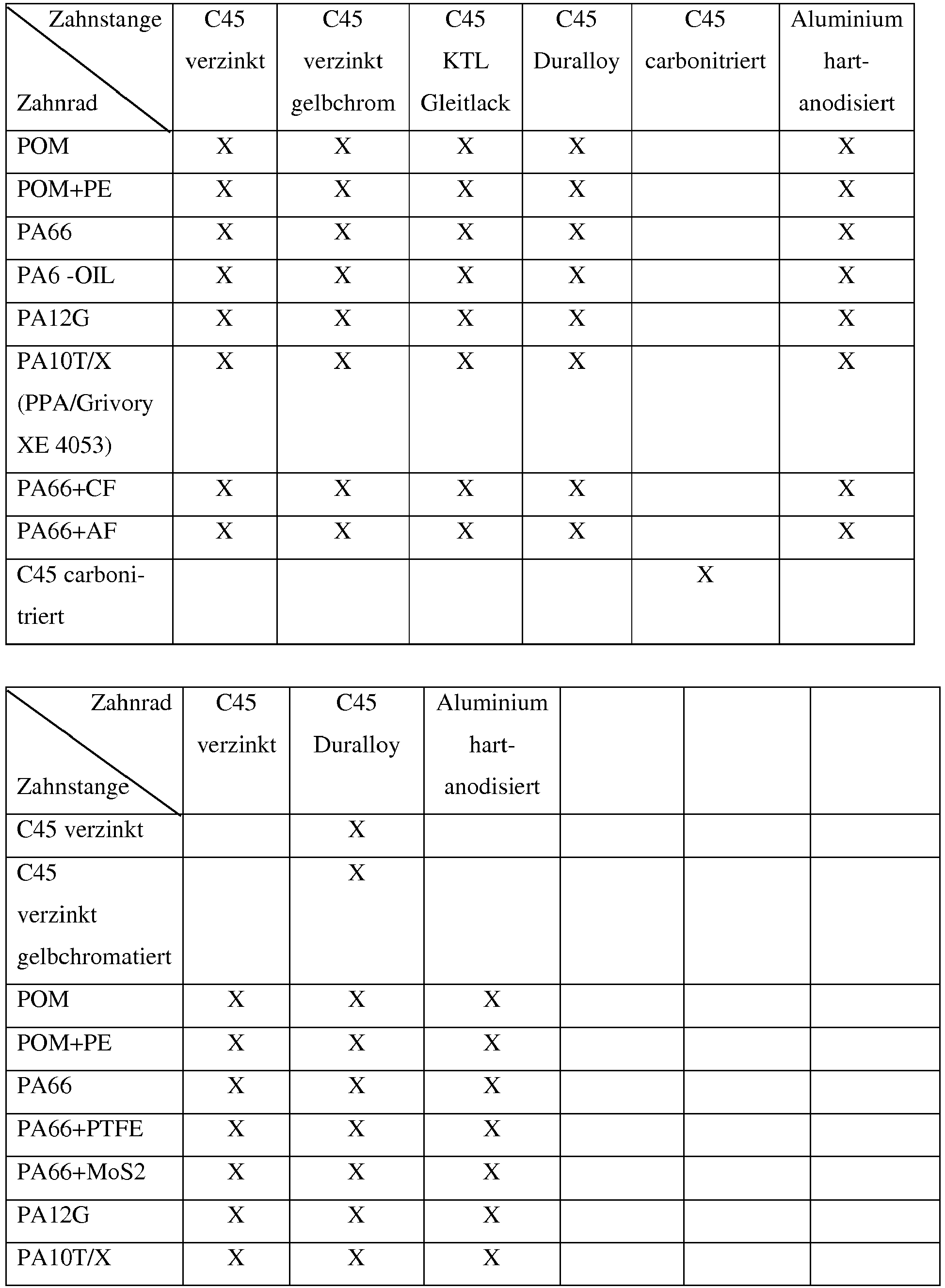

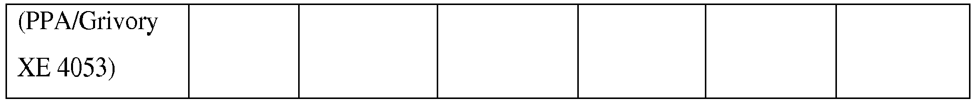

Legende: C45 (Stahl mit 0,45% Kohlenstoffanteil), Gelbchromatieren (Aufbringen einer gelben Chrombeschichtung), Duralloy (Dünnchrombeschichtung), KTL (kathodisches Tauchlackieren), Carbonitrieren (Besonderes Härteverfahren), Hartanodisieren (Aufbringen besonders widerstandsfähiger Oxidschichten), POM (Polyoxymethylen), PE (Polyethylen), PTFE (Polytetrafluorethylen), PAx (Polyamid), MoS2 (Molybdändisulfid), PPA (Polyphthalamid). Die genannten Kunststoffe können mit Füllmaterial versetzt sein, insbesondere mit Fasern. Im Speziellen eignen sich hierzu Kohlefasern (CF), Aramidfasern (AF) und Glasfasern (GF). Als besonders vorteilhaft haben sich in diesem Zusammenhang die Verbundwerkstoffe PA66+CF und PA66+AF herausgestellt.

Generell können die Führungswägen/Führungsschlitten 51..53 bei dem in den Fig. 1 und 2 dargestellten Schiebetürmodul/Schwenkschiebetürmodul 1 starr oder gelenkig mit dem Querträger 61, 62 verbunden sein. Sind sie gelenkig verbunden, so kann ein Drehlager 15 unter Umständen eingespart werden, da die Zahnstange 71, 72 durch die gelenkige Aufhängung des Querträgers 61, 62 auch ohne Drehlager 15 sehr gut vom Träger 3 entkoppelt ist.

Die Ausführungsbeispiele zeigen mögliche Ausführungsvarianten eines erfindungsgemäßen Schiebetürmoduls/Schwenkschiebetürmoduls 1, wobei an dieser Stelle bemerkt sei, dass die Erfindung nicht auf die speziell dargestellten Ausführungsvarianten derselben bzw. desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass ein Schiebetürmodul/Schwenkschiebetürmodul 1 in der Realität auch mehr oder weniger Bestandteile als dargestellt umfassen kann.

Der Ordnung halber sei abschließend darauf hingewiesen, dass zum besseren Verständnis des Aufbaus des Schiebetürmoduls/Schwenkschiebetürmoduls 1 dieses beziehungsweise dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Schiebetürmodul/Schwenkschiebetürmodul
- 21, 22: Türflügel
- 3: Träger
- 41, 42: Profilschiene/Profilbereich
- 51..53: Führungswagen/Führungsschlitten

- 61, 62: Querträger
- 71, 72: Zahnstange
- 81, 82: Verbindungsplatte
- 9: Zahnrad
- 10: metallischer Träger

- 11: Kunststoffverzahnung
- 12: Rastnase
- 13: Bohrung
- 14: erste Gleitführung
- 15: Drehlager

- 16: Gleitnut der zweiten Gleitführung
- 17: Gleitbolzen/Nutstein der zweiten Gleitführung
- 18: kombiniertes Dreh- und Schiebelager

## Patentansprüche

1. Schiebetürmodul/Schwenkschiebetürmodul (1) für ein Schienenfahrzeug umfassend:
- einen Türflügel (21, 22),
- einen in Schieberichtung des Türflügels (21, 22) längs ausgerichteten Träger (3), welcher insbesondere quer zu seiner Längserstreckung in horizontaler Richtung verschiebbar gelagert ist, und
- eine Linearführung mit einer Profilschiene (41, 42) und wenigstens einem darauf verschiebbar gelagerten Führungswagen oder Führungsschlitten (51..54), wobei die Profilschiene (41, 42) auf dem Träger (3) befestigt oder von diesem in Form eines Profilbereichs umfasst ist und wobei der Türflügel (21, 22) mit Hilfe des zumindest einen Führungswagens/Führungsschlittens (51..54) verschiebbar gelagert ist, **gekennzeichnet durch**
- einen Zahnstangenantrieb für den Türflügel (21, 22), dessen Zahnrad (9) eine härtere Oberfläche beziehungsweise ein härteres Material aufweist als dessen Zahnstange (71, 72).

2. Schiebetürmodul/Schwenkschiebetürmodul (1) nach Anspruch 1, **dadurch gekennzeichnet, dass** das Zahnrad (9) aus Metall und die Zahnstange (71, 72) aus Kunststoff, insbesondere aus Polyamid PA12G, besteht.

3. Schiebetürmodul/Schwenkschiebetürmodul (1) nach Anspruch 1 oder 2, **dadurch gekennzeichnet, dass** das Zahnrad (9) aus Metall besteht und die Zahnstange (71, 72) einen metallischen Träger (10), insbesondere aus Stahl oder Aluminium, mit einer darauf montierten Kunststoffverzahnung (11), insbesondere aus Polyamid PA12G, aufweist.

4. Schiebetürmodul/Schwenkschiebetürmodul (1) nach Anspruch 3, **dadurch gekennzeichnet, dass** die Kunststoffverzahnung (11) mit Hilfe einer Rastverbindung (12, 13) auf den metallischen Träger (10) befestigt ist.

5. Schiebetürmodul/Schwenkschiebetürmodul (1) nach Anspruch 3 oder 4, **dadurch gekennzeichnet, dass** die Kunststoffverzahnung (11) aus mehreren Segmenten besteht.

6. Schiebetürmodul/Schwenkschiebetürmodul (1) nach Anspruch 5, **dadurch gekennzeichnet, dass** die Segmente untereinander durch eine Nut-Feder-Verbindung oder eine Schwalbenschwanzverbindung verbunden sind.

7. Schiebetürmodul/Schwenkschiebetürmodul (1) nach Anspruch 3, **dadurch gekennzeichnet, dass** die Kunststoffverzahnung (11) auf den metallischen Träger (10) aufgeklebt ist.

8. Schiebetürmodul/Schwenkschiebetürmodul (1) nach Anspruch 3, **dadurch gekennzeichnet, dass** die Kunststoffverzahnung (11) auf den metallischen Träger (10) aufgespritzt oder aufgegossen ist.

9. Schiebetürmodul/Schwenkschiebetürmodul (1) nach einem der Ansprüche 1 bis 8, **dadurch gekennzeichnet, dass** der Zahnstangenantrieb für den Türflügel (21, 22) eine lediglich in ihrem ersten Endbereich mit dem zumindest einen Führungswagen/Führungsschlitten (51..54) beziehungsweise dem Türflügel (21, 22) direkt oder indirekt verbundene Zahnstange (71, 72) aufweist, dessen fliegendes Ende mit einem drehbar im Träger (3) gelagerten Zahnrad (9) in Eingriff steht.

10. Schiebetürmodul/Schwenkschiebetürmodul (1) nach Anspruch 9, **dadurch gekennzeichnet, dass** der erste Endbereich der Zahnstange gegenüber dem zumindest einen Führungswagen/Führungsschlitten (51..54) lagefixiert ist.

11. Schiebetürmodul/Schwenkschiebetürmodul (1) nach Anspruch 9, **dadurch gekennzeichnet, dass** der erste Endbereich der Zahnstange (71, 72) gegenüber dem zumindest einen Führungswagen/Führungsschlitten (51..54) drehbar und/oder verschiebbar gelagert ist.

12. Schiebetürmodul/Schwenkschiebetürmodul (1) nach einem der Ansprüche 9 bis 11, **dadurch gekennzeichnet, dass** gegenüber dem Zahnrad (9) eine erste Gleitführung (14) oder ein Wälzkörper für die Führung der Zahnstange (71, 72) angeordnet ist.

13. Schiebetürmodul/Schwenkschiebetürmodul (1) nach einem der Ansprüche 9 bis 12, **dadurch gekennzeichnet, dass** das fliegende Ende der Zahnstange (71, 72) in einer zweiten Gleitführung (16, 17) gelagert ist.

14. Schiebetürmodul/Schwenkschiebetürmodul (1) nach einem der Ansprüche 9 bis 13, **dadurch gekennzeichnet, dass** die Zahnstange (71, 72) an mehreren voneinander beabstandeten Punkten in einer zweiten Gleitführung (16, 17) gelagert ist.

15. Schiebetürmodul/Schwenkschiebetürmodul (1) nach einem der Ansprüche 1 bis 14, **dadurch gekennzeichnet, dass** dieses doppelflügelig ausgeführt ist und das Zahnrad (9) mit zwei Zahnstangen (71, 72) in Eingriff steht, von denen je eine für die Bewegung je eines Türflügels (2) vorgesehen ist, wobei die Zahnstangen (71, 72) mit einander zuweisender Zahnung gegenüberliegend angeordnet sind.

16. Schiebetürmodul/Schwenkschiebetürmodul (1) Anspruch 15, **dadurch gekennzeichnet, dass** eine Zahnstange (71) mit nach unten weisender Zahnung oberhalb des Zahnrads (9) und die andere Zahnstange (72) mit nach oben weisender Zahnung unterhalb des Zahnrads (9) angeordnet ist.

17. Schiebetürmodul/Schwenkschiebetürmodul (1) nach einem der Ansprüche 1 bis 16, **gekennzeichnet durch** einen auf dem zumindest einen Führungswagen/Führungsschlitten (51..54) befestigten Querträger (61, 62), in welchem der Türflügel (21, 22) drehbar gelagert ist und auf welcher die Zahnstange (71, 72) befestigt ist.
